Europäisches Patentamt

European Patent Office

Office européen des brevets

(19)

(11) Veröffentlichungsnummer: **0 273 405**
**B1**

(12) **EUROPÄISCHE PATENTSCHRIFT**

(45) Veröffentlichungstag der Patentschrift:
12.09.90

(51) Int. Cl.⁵: **B29C 45/17**

(21) Anmeldenummer: **87119177.1**

(22) Anmeldetag: **24.12.87**

(54) **Giessformwechseleinrichtung an einer Kunststoff-Spritzgiessmaschine.**

(30) Priorität: 30.12.86 DE 3644709

(43) Veröffentlichungstag der Anmeldung:
06.07.88 Patentblatt 88/27

(45) Bekanntmachung des Hinweises auf die Patenterteilung:
12.09.90 Patentblatt 90/37

(84) Benannte Vertragsstaaten:
AT CH DE ES FR GB IT LI NL

(56) Entgegenhaltungen:
EP-A- 0 111 570
DE-A- 3 220 968
DE-C- 3 242 169
DE-C- 3 436 182
US-A- 4 487 564

(73) Patentinhaber: Hehl, Karl, Arthur-Hehl-Strasse 32,
D-7298 Lossburg 1(DE)

(72) Erfinder: Hehl, Karl, Arthur-Hehl-Strasse 32,
D-7298 Lossburg 1(DE)

(74) Vertreter: Mayer, Friedrich, Dr., Patentanwälte Dr. F.
Mayer Dipl.-Phys. G. Frank Westliche 24,
D-7530 Pforzheim(DE)

## Beschreibung

Die Erfindung bezieht sich auf eine Gießformwechseleinrichtung entsprechend dem Oberbegriff des Patentanspruches 1.

Bei einer bekannten Gießformwechseleinrichtung dieser Art (US-Patentschrift 4,555,228) sind gesonderte hydraulische Betätigungszylinder an der Rückseite des stationären Formträgers vorgesehen, mit deren Hilfe zwei an den vertikalen Seitenflächen einer Formhälfte angeordnete Winkelhebel betätigbar sind. Dabei ist eine Entriegelung erst möglich, wenn diese Formhälfte mittels der eigens hierfür vorgesehenen Spannzylinder auf den stationären Formträger aufgespannt ist.

Es ist auch bekannt (DE-PS 34 36 182), die Annäherung einer Formhälfte an dem benachbarten Formträger als Impuls für die Entriegelung der Spritzgießform zu verwenden. Als Verriegelungsorgane sind dabei jedoch Kupplungsbolzen vorgesehen, die in den Zentrierkörpern der Spritzgießform begrenzt axial verschieblich gelagert sind und die unter dem Druck einer vorgespannten Feder rückseitig aus der verriegelten Spritzgießform herausragen. Dadurch wird erreicht, daß bei Abnahme der die Zentrierkörper aufnehmenden Gießformhälfte vom zugehörigen Formträger eine gegenseitige Verriegelung und beim Aufspannen dieser Gießformhälfte auf den Formträger eine Entriegelung je selbsttätig erfolgen.

Es ist auch bekannt, die Schließ- und Öffnungsbewegung der Formschließeinheit zur Betätigung von Verriegelungsorganen zu verwenden (GB-PS 2 067 458).

Bekannt sind auch Gießformwechselvorrichtungen, bei welchen die Spritzgießform auf einer senkrecht zur Schließrichtung verlaufenden horizontalen Transportbahn in den Formspannraum bzw. aus diesem bewegbar und bei ihrem Transport an beiden Formträgern zugleich abstützbar und führbar ist. Dabei befinden sich die Anlageflächen der Anlageplatten in einem minimalem Abstand von den benachbarten Aufspannflächen der Formträger (DE-PS 32 42 169; DE-PS 32 13 209). Schließlich ist es bekannt, schwenkbare Riegellaschen zur beidseitigen manuellen Verriegelung einer Spritzgießform zu verwenden (DE-GM 82 12 045.5 - Fig. 1).

Ausgehend von dem genannten Stand der Technik liegt der Erfindung die Aufgabe zugrunde, eine Gießformwechseleinrichtung der eingangs genannten Gattung derart weiterzubilden, daß eine wesentlich rationellere Serienfertigung bei geringerem technischen Aufwand möglich ist.

Diese Aufgabe wird durch die im Kennzeichen des Patentanspruches 1 genannten Merkmale gelöst.

Bei einer solchen Lösung entfällt (im Vergleich zur Gießformwechselvorrichtung gemäß der US-PS 4,555,228) eine gesonderter Entriegelungsantrieb für die Winkelhebel. Zur Entriegelungsverschwenkung kann der letzte Abschnitt des Schließhubes der Schließhydraulic für die Formschließeinheit oder die Spanneinrichtung zum Aufspannen der Formhälften auf die Formträger Verwendung finden. Der Schließhydraulik und der Spanneinrichtung kommen insoweit eine Doppelfunktion zu.

Im Vergleich zur Gießformwechseleinrichtung gemäß der DE-PS 34 36 182 sind die Verriegelungsmechanismen einfacher sowie robuster und erfordern auch einen geringeren Aufwand bei der Fertigung.

Die Merkmalskombination des Patentanspruches 1 zeitigt aber auch noch andere Vorteile: Bei entsprechender Gestaltung des Winkelhebels ergibt sich ein extrem kurzer Schwenkweg bei der Verriegelungsverschwenkung bzw. Entriegelungsverschwenkung des Winkelhebels und dementsprechend auch ein entsprechend geringer Minimalabstand zwischen der Anlagefläche der Anlageplatte und der Aufspannfläche des zugehörigen Formträgers. Der kürzere Schwenkweg ist andererseits gleichbedeutend mit einem geringeren Vorspannungsweg, welche die Rückstellfeder bei der Entriegelungsverschwenkung durchläuft. Insoweit kann auch bei günstiger Federcharakteristik die für die Entriegelungsverschwenkung erforderliche Kraft minimert werden. Dies kann zum Beispiel von Interesse sein, wenn die verriegelte Spritzgießform zur Reparatur oder zu Reinigungszwecken außerhalb einer Spritzgießmaschine geöffnet werden soll und kein zur Entriegelung geeigneter Spannapparat zum Eindrücken der Beaufschlagungskanten in die Anlageplatte zur Verfügung steht.

Allerdings ist es in der Regel erforderlich, daß auch eine verringerte Rückstellkraft der Rückstellfeder zur Verschiebung der Spritzgießform auf ihren Stützelementen in Schließrichtung ausreichend ist, um den für die Verriegelungsbewegung erforderlichen Minimalabstand zwischen der Spritzgießform und dem benachbarten Formträger wieder herzustellen. Dies geschieht nach Patentanspruch 3 zweckmäßigerweise dadurch, daß die Friktionsflächen zwischen der Spritzgießform und den Stützelementen extrem klein gehalten werden, was durch eine einfache Maßnahme, insbesondere durch Ausbildung der Stützelemente als zylindrische Bolzen erreicht wird, so daß die Spritzgießform je auf der oberen Mantellinie der Bolzen aufliegt.

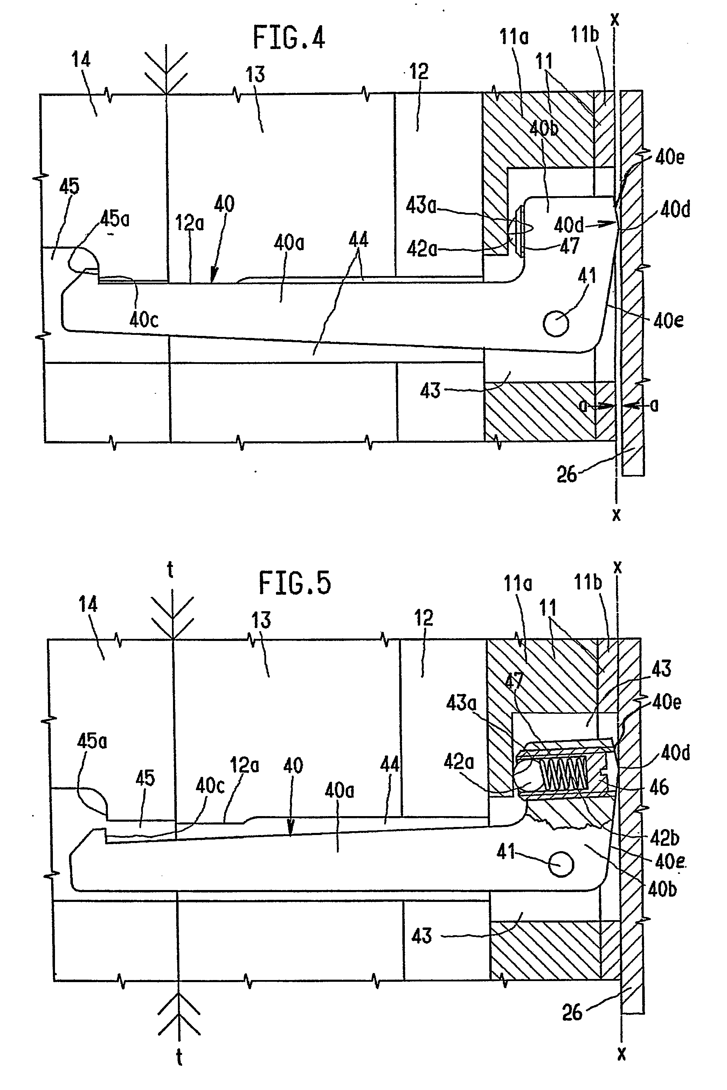

Bei der erfindungsgemäßen Lösung liegt schließlich die Voraussetzung dafür vor, daß die Spritzgießform zweckmäßigerweise beim Quertransport an beiden Formträgern zugleich abstützbar und führbar ist. Bei einer solchen Führung liegt das Kippprofil der Beaufschlagungskante des Winkelhebels wenigstens zeitweise an der Anlagefläche des stationären Formträgers und die dem bewegbaren Formträger zugewandte Anlageplatte wenigstens zeitweise und teilweise an der Aufspannfläche dieses Formträgers an. In diesem Zusammenhang ist die dachförmige Ausbildung des Kipprofils der Beaufschlagungskante sehr vorteilhaft. Beim Quertransport der Spritzgießform liegt nämlich (wie aus Fig. 4 ersichtlich) in diesem Falle die durch das dachförmige Profil zurückversetzte Stirnkante des Betätigungsarmes noch innerhalb der Anlageplatte. Insofern kann das dachförmige Kipprofil beim Quertransport der Spritzgießform im Falle nicht ganz ausreichender Zentrierung auf der Transportbahn zentrierende Wirkung haben.

Nachstehend wird die Erfindung anhand der Zeichnung an einem Ausführungsbeispiel erläutert. Es zeigen:

Fig. 1 Einen Ausschnitt aus der mit der Gießformwechseleinrichtung ausgerüsteten Kunststoff-Spritzgießmaschine in Seitenansicht,

Fig. 2 einen Schnitt nach Linie II-II von Fig. 1,

Fig. 3 die mit der Verriegelungsvorrichtung ausgerüstete Spritzgießform für die Gießformwechseleinrichtung in perspektivischer Darstellung,

Fig. 4 einen im Bereich des Winkelhebels genommenen Ausschnitt aus der Spritzgießform gemäß Fig. 3 in Draufsicht und in vergrößerter Darstellung bei verriegelter Spritzgießform,

Fig. 5 die Anordnung gemäß Fig. 4 bei entriegelter Spritzgießform und

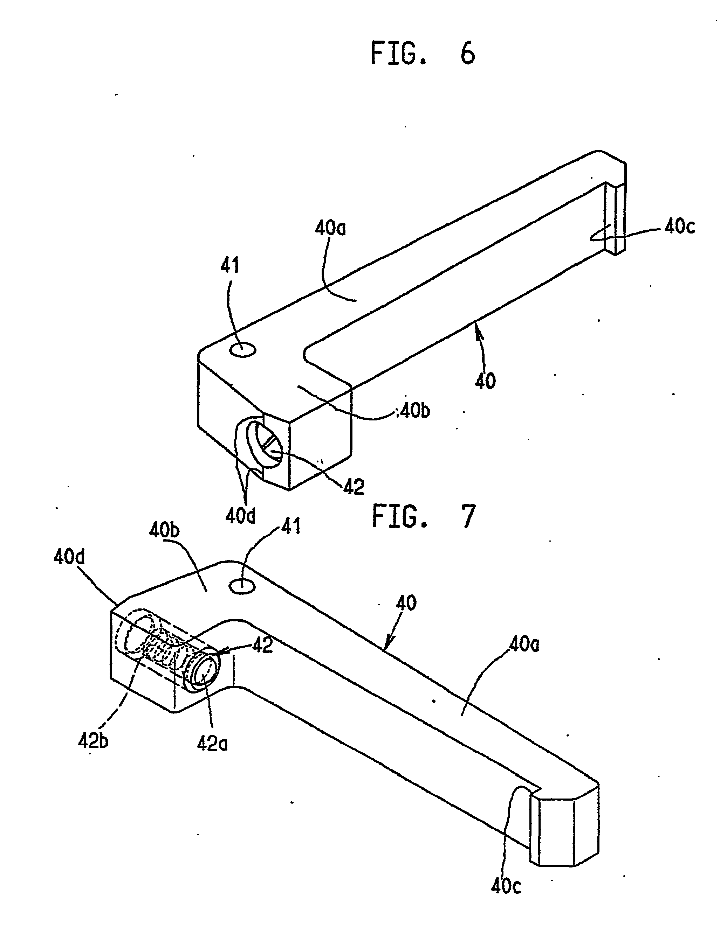

Fig. 6 und 7 den perspektivisch dargestellten Winkelhebel aus unterschiedlicher Blickrichtung.

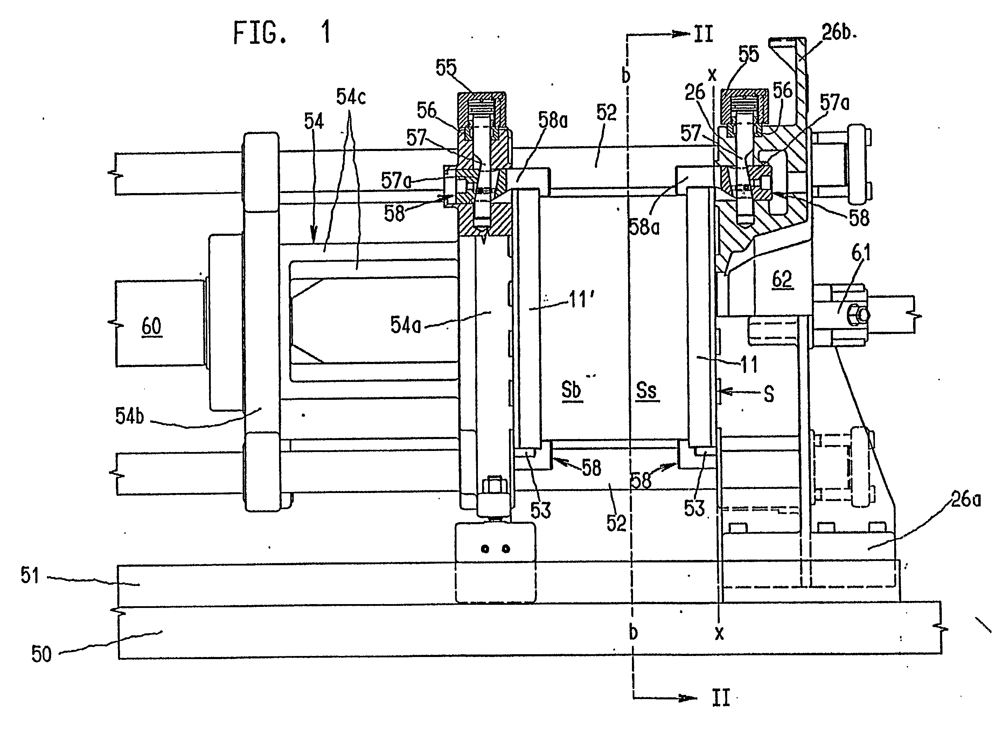

Die Formschließeinheit der Kunststoff-Spritzgießmaschine ist auf deren Maschinenfuß 50 abgestützt. Die Formschließeinheit umfaßt einen stationären Formträger 26, der über Trägerrippen 26a an zwei parallelen Führungsleisten 51 zentriert und befestigt ist, welche ihrerseits je auf der horizontalen Fläche eines oberen Bördels 50a des Maschinenfu-ßes aufliegen und mit diesem fest verbunden sind. Ein Versteifungsschild 26b des plattenförmigen Formträgers 26 erhöht die mechanische Belastbarkeit. Ein rahmenartig ausgebildeter bewegbarer Formträger 54 ist mit Hilfe einer Schließhydraulik 60 auf stationären Säulen 52 in Richtung des bewegbaren Formträgers 26 und von diesem weg verschiebbar. Der bewegbare Formträger 54 umfaßt stirnseitig eine Aufspannplatte 54a, eine rückseitige Druckübertragungswand 54b und Stützrippen 54c zwischen der Aufspannplatte und der Druckübertragungswand. Die Schließhydraulik 60 ist an einer (zeichnerisch nicht dargestellten) Montageplatte axial abgestützt, die über die Führungsleiste 51 mit dem Maschinenfuß 50 fest verbunden ist. Der bewegbare Formträger 54 ist über ein Stützorgan auf der Führungsleiste 51 gleitbar abgestützt. Die Säulen 52 sind rückseitig in der Montageplatte und gießformseitig im stationären Formträger 26 aufgenommen. In Fig. 1 befindet sich die geschlossene Spritzgießform S in Arbeitsposition. Eine Spritzgießeinheit ist bei horizontaler Spritzachse mit Hilfe von Anschlußorganen 61 an den stationären Formträger 26 anschließbar. Sie ist über die zentrale Öffnung 62 im stationären Formträger 26 auf die Angußöffnung der Spritzgießform aufsetzbar und arbeitet also quer zur Trennfuge t-t. Die Formhälften Ss und Sb der mit Anlageplatten 11 und 11' versehenen Spritzgießform S sind mit Hilfe von Spanneinrichtungen auf die Formträger 26 und 54 aufspannbar.

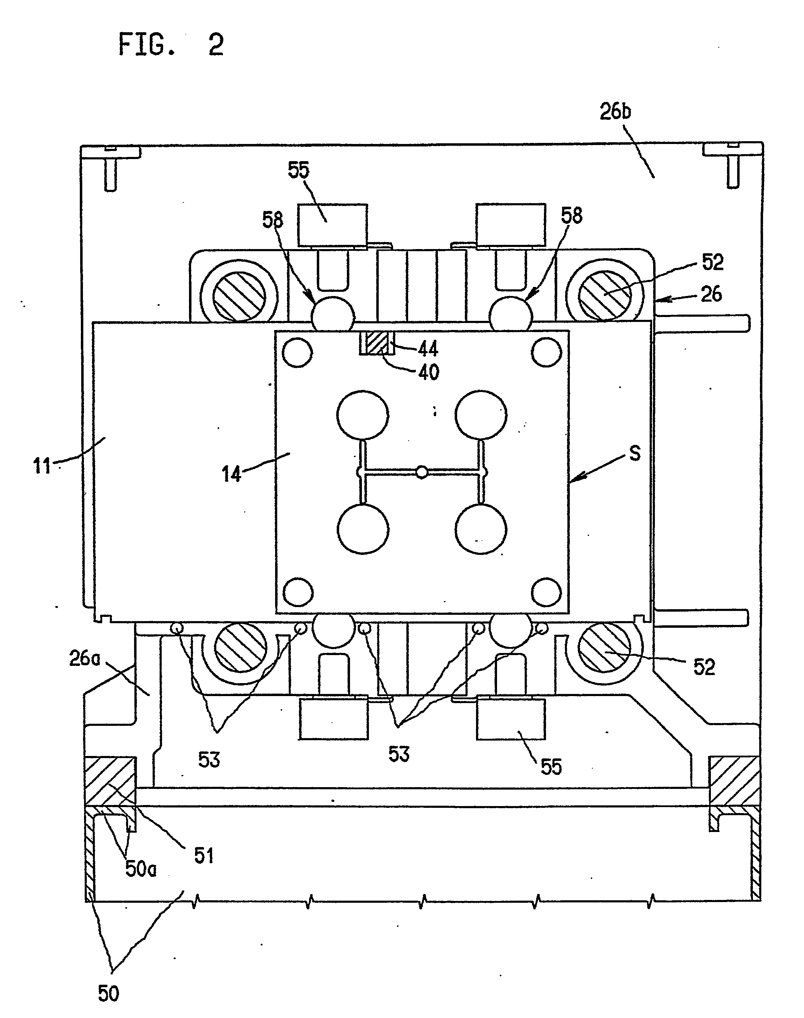

Die Spanneinrichtungen umfassen, wie aus den Fign. 1,2 ersichtlich, Spannbolzen 58, die in den Formträgern in Schließrichtung begrenzt verschieblich gelagert sind. Die Spannbolzen 58 hintergreifen die Anlageplatten 11,11' der Spritzgießform S mittels Greifernasen 58a. Beim Aufspannen der Formhälften Ss und Sb werden die Spannbolzen 58 mit Hilfe von Schiebern 57 vorgespannt, die im Formträger 26 bzw. in der Aufspannplatte 54a des bewegbaren Formträgers 54 quer zur Schließrichtung verschiebbar gelagert sind. Die Schieber 57 stellen zugleich die Kolbenstangen der Kolben von hydraulischen Spannzylindern 55 dar, welche über Führungsbuchsen 56 seitlich an dem stationären Formträger 26 bzw. an der Aufspannplatte 54a zentriert und befestigt sind. Schräge Arbeitsflächen 57a der Schieber 57 arbeiten mit korrespondierenden schrägen Arbeitsflächen der Spannbolzen 58 zum Aufspannen der Formhälften Ss und Sb zusammen. Wie aus den Fign. 1 und 2 erkennbar, ist die Spritzgießform im Spannraum zugleich an beiden Formträgern 26 und 54 mittels Führungselementen 53 abstützbar. Beim Transport der Spritzgießform in Arbeitsposition in den Spannraum ist die Spritzgießform S auf den Stützelementen 53 und an den Aufspannflächen beider Formträger 26 und 54 führbar , welche Aufspannflächen sich in einem minimalen Abstand von den Anlageflächen der Anlageplatten 11,11' befinden, die bei der Transportbewegung wenigstens zeitweise und partiell an diesen anliegen. Bei einem solchen Transportsystem ist es nicht erforderlich, beim Gießformwechsel die Spannbolzen 58 aus dem Spannraum axial herauszuziehen, da beim Quertransport die Greifernasen die Anlageplatten 11,11' auch bei nicht vorgespannten Zustand der Spannbolzen 58 ständig hintergreifen. Zum Festspannen bzw. Lösen der Formhälften Ss;Sb genügt ein minimaler Spann- bzw. Lösehub im Bereich von 1mm bis 2mm.

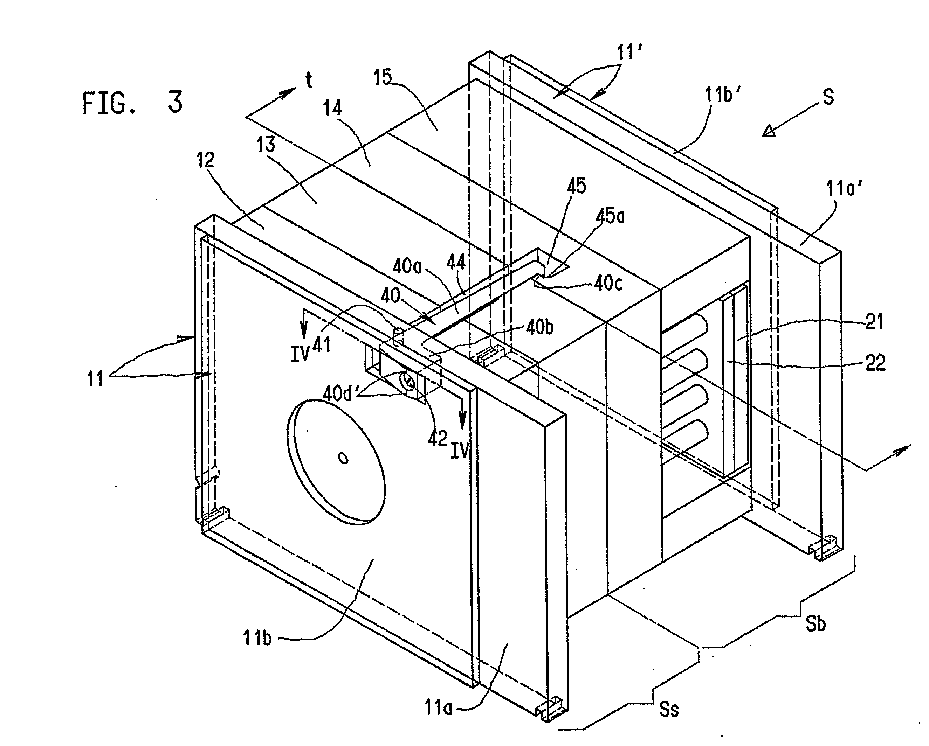

Die Spritzgießform S ist mit einer Verriegelungseinrichung zum Verriegeln ausgerüstet. Diese umfaßt einen an der einen Gießformhälfte Ss auf einer Achse 41 schwenkbar gelagerten zweiarmigen Winkelhebel 40. Dieser hintergreift in Verriegelungsposition mit einem Riegelarm 40a mit-tels Verriegelungsnase 40c eine Verriegelungskan-te 45a der Gießformhälfte Sb zur Verriegelung. Der Winkelhebel 40 ist mittels eines etwa senkrecht zum Riegelarm 40a stehenden Betätigungsarmes 40b motorisch nach Programm des Rechners der Kunststoff-Spritzgießmaschine betätigbar. Wie aus den Fign.3-5 ersichtlich, ist der Betätigungsarm 40b in einer Ausnehmung 43 der Anlageplatte 11 angeordnet. Befindet sich der Winkelhebel 40 in Ver-riegelungsposition, so überragt die Beaufschla-gungskante 40d als Kipprofil ausgebildete Fläche 40e des Betätigungsarmes 40b die Anlageplatte 11 derart, daß das Kipprofil der im Spannraum befindlichen, verriegelten Spritzgießform S unter geringfügigem Kippen zur Entriegelung in die Ebene x-x (Fig. 1) der Anlagefläche der Anlageplatte 11 eindrückbar ist. Im zeichnerisch dargestellten Ausführungsbeispiel umfaßt die Verriegelungseinrichtung einen einzigen Winkelhebel 40 mit in der Anlageplatte 11 der Formhälfte Ss gelagerter vertikaler Schwenkachse 41. Der Riegelarm 40a ist in Ausnehmungen 43,44,45 der Gießformhälften Ss;Sb aufgenommen, die durch offene Einarbeitungen in den Körpern dieser Formhälften gebildet sind. Der in den Einarbeitungen aufgenommene Riegelarm 40a ist mit seiner oberen Fläche etwa bündig mit der oberen Oberfläche der Körper der Formhälften Ss bzw.

Sb. Dasselbe gilt für die obere Begrenzungsfläche der den Betätigungsarm 40b aufnehmenden Ausnehmung 43 in der Anlageplatte 11. Im zeichnerisch dargestellten Ausführungsbeispiel bestehen die Anlageplatten 11,11' je aus einer Befestigungsplatte 11a bzw. 11a', welche den Körper der Spritzgießform S auf allen vier Seiten überragt und aus einer Isolierplatte 11b bzw. 11b'. Die Befestigungsplatte 11a liegt an einer Fassonplatte 12 des Gießformkörpers an. Seine zugehörige Isolierplatte 11b bildet die Anlagefläche zur Anlage an der Aufspannfläche des stationären Formträgers 26. Die Befestigungsplatte 11a' liegt an Abstandstücken 15 des Gießformkörpers an und ist mit Hilfe der Isolierplatte 11b' abgedeckt, welche die Anlagefläche zur Anlage der Formhälfte Sb an die Aufspannfläche des bewegbaren Formträgers 54 bildet. Eine Konturenplatte 13 der Formhälfte Ss grenzt an die Trennebene t-t an. Dasselbe gilt für eine Konturenabstützplatte 14 der Formhälfte Sb, die rückseitig an den Abstandstücken 15 abgestützt ist, welche einen Raum im Gießformkörper begrenzen, in dem sich Organe einer Auswerfereinrichtung für die Spritzlinge befinden. So sind dort die Auswerferplatte 22 und eine Auswerferabdeckplatte 21 auf Führungsstangen quer zur Trennebene t-t verschiebbar gelagert.

Wie insbesondere aus Fig. 4 deutlich wird, befindet sich die Anlagefläche der den Betätigungsarm 40b aufnehmenden Anlageplatte 11 beim horizontalen Transport der Spritzgießform S in einem Minimalabstand a-a von der Aufspannfläche des stationären Formträgers 26. Dabei liegt die Beaufschlagungskante 40d des Betätigungsarmes 40b an der Aufspannfläche dieses Formträgers 26 gleitbar an. Die Beaufschlagungskante 40d des Winkelhebels 40 verläuft parallel zur Schwenkachse 41. Beim Transport der Spritzgießform im Spannraum, also vor deren Entriegelung, liegt diese Beaufschlagungskante zur Führung an der Aufspannfläche des benachbarten Formträgers 26 an. Im konkreten Ausführungsbeispiel erstreckt sich die Ausnehmung für den Riegelarm 40a über die an der Befestigungsplatte 11 anliegende Fassonplatte 12 und die an die Trennfuge t-t angrenzende Konturenplatte 13 in eine ebenfalls an die Trennfuge t-t angrenzende Konturenabstützplatte 14 der anderen Formhälfte Sb hinein. In dieser Konturenabstützplatte 14 ist eine Verriegelungskammer 45 mit der Verriegelungskante 45a für die Verriegelungsnase 40c gebildet. Der Riegelarm 40a ist mehr als doppelt so lang wie der Betätigungsarm 40b, so daß ein extrem geringer Schwenkweg des Winkelhebels 40 zur Entriegelung möglich ist. Der Schwenkweg des Winkelhebels 40 bei Entriegelung ist durch die Anlage der Anlageplatte 11 an der Aufspannfläche des Formträgers 26, der gegensätzliche Schwenkweg durch die Anlage des Riegelarmes 40a an einer vertikalen Anschlagfläche 12a der Fassonplatte 12 begrenzt. In einer etwa horizontal verlaufenden Bohrung des Betätigungsarmes 40b ist eine als Schraubenfeder ausgebildete Rückstellfeder 42b aufgenommen. Diese greift über ein kugeliges Stützelement 42a an einer vertikalen Widerlagerfläche der Anlageplatte 11 an. Die Rückstellfeder 42b ist in der Bohrung einer Madenschraube 46 aufgenommen und an dieser axial abgestützt. Die Madenschraube 46 steht ihrerseits mit einer die Bohrung des Betätigungsarmes 40b auskleidenden Hülse 47 im Gewindeeingriff. Da sich die Anlageflächen der Anlageplatten 11,11' der Spritzgießform S bei ihrem Transport in den Spannraum bzw. aus dem Spannraum in einem Minimalabstand a-a von beispielsweise 1 mm bis 2 mm von den benachbarten Aufspannflächen der Formträger 26,54 befinden, erleichtert das dachförmige Kippprofil mit vertikaler Beaufschlagungskante 40d die Einführung der Spritzgießform S zwischen die Formträger, weil die kürzere der vertikalen Einlaufflächen 40e des dachförmigen Kippprofils noch innerhalb der Ebene der Anlagefläche der Anlageplatte 11 liegt, wie aus Fig. 4 ersichtlich. Aus diesem Grunde ist ein Aufprall des Kippprofils an der Seitenkante des stationären Formträgers beim Transport der Spritzgießform S in den Spannraum ausgeschlossen. Wie aus einem Vergleich der Fign. 4 und 5 ergibt, ist die erforderliche Kippbewegung des Kippprofils beim Entriegeln der Spritzgießform extrem gering. Ein Schwenkwinkel von ca. 2° kann bereits ausreichend sein.

Die durch den Schließhub der Schließhydraulik bewirkte Verringerung des Abstandes zwischen der Anlagefläche der Anlageplatte 11 bzw. 11' und der Aufspannfläche des benachbarten Formträgers 26 bzw. 54 erzwingt die Entriegelung im Gefolge eines Eindrückens der Beaufschlagungskante 40d in die Ebene x-x der Anlageplatte 11 bzw. 11'. Erst danach wird die in Betracht gezogene Formhälfte Ss bzw. Sb mit Hilfe der Spanneinrichtung mit dem zugehörigen Formträger 26 bzw. 54 für den Spritzbetrieb verspannt. Durch diese Verspannung wird die Entriegelung während des Spritzbetriebes aufrecht erhalten. Zur Einleitung eines Gießformwechsels wird zuerst die Verspannung zwischen der Formhälfte Ss bzw. Sb und dem Formträger 26 bzw. 54 bei geöffneter Formschließeinheit gelöst und dadurch der unter der Vorspannung seiner Rückstellfeder 42b stehende Winkelhebel 40 zur Verriegelungsverschwenkung freigegeben. Dabei wird bei geringfügigem Zurückfahren des bewegbaren Formträgers (54), die betreffende Formhälfte mittels der Rückstellfeder 42b auf den Stützelementen 53 geringfügig verschoben, wodurch der Minimalabstand a–a wieder hergestellt wird.

Möglich ist aber auch eine andere Handhabung, bei welcher nicht nur die Verriegelung nach Beendigung des Spritzbetriebes, sondern auch die Entriegelung der Spritzgießform bei Beginn des Spriztberiebes durch die Spanneinrichtung bewirkt wird, indem die bei einem Minimalabstand a-a zwischen Formhälfte 11 und Formträger 26 in den Spannraum eingefahrene Spritzgießform zuerst mit Hilfe der Spanneinrichtung auf den Formträger 26 nach Programm aufgespannt wird und der Schließhub der Schließhydraulik erst danach erfolgt. Diese Handhabung setzt jedoch ein im Programm des Rechners vorgegebenes zeitlich aufeinanderfolgendes Aufspannen beider Formträger voraus.

**Patentansprüche**

1. Gießformwechseleinrichtung an der mittels einer Schließhydraulik betätigbaren Formschließeinheit einer Kunststoff-Spritzgießmaschine mit einer Spanneinrichtng zum Festspannen bzw. Lösen der je mit Anlageplatte (11;11') versehenen Formhälften (Ss;Sb) der Spritzgießform (S) an den Formträgern (26;54) und mit einer Transportvorrichtung für einen Quertransport der Spritzgießform (S) aus bzw. in Arbeitsposition, sowie mit einer Verriegelungseinrichtung, welche wenigstens einen an der einen Formhälfte (Ss;Sb) schwenkbar (Achse 41) gelagerten zweiarmigen Winkelhebel (40) umfaßt, der durch einen am Betätigungsarm (40b) des Winkelhebels (40) angreifenden motorischen Entriegelungsantrieb entgegen der Kraft einer Rückstellfeder (42b) in Entriegelungsposition und durch die vorgespannte Rückstellfeder (42b) in Verriegelungsposition verschwenkbar (Entriegelungsverschwenkung; Verriegelungsverschwenkung) ist, dadurch gekennzeichnet, daß der Betätigungsarm (40b) in einer Ausnehmung (43) der Anlageplatte (11;11') der betreffenden Formhälfte (Ss;Sb) aufgenommen ist, daß seine mit Kipprofil versehene Beaufschlagungskante (40d) beim Quertransport der verriegelten Spritzgießform (S) diese Anlageplatte (11;11') überragt, welche sich in einem entsprechenden Minimalabstand (a-a) zum Formträger (26 bzw. 54) befindet und daß die Beaufschlagungskante (40d) im Gefolge einer durch den Entriegelungsantrieb bewirkte Annäherung zwischen Formhälfte (Ss;Sb) und Formträger (26 bzw. 54) in die Ebene (x-x) der Anlageplatte (11 bzw. 11') zur Entriegelung unter Kippen des Kipprofils eindrückbar und durch die Spanneinrichtung (55;58) in eingedrückter Position festlegbar ist, wobei die Rückstellfeder (42b) bei Einleitung des Gießformwechsels durch Lösen der Formhälfte (Ss;Sb) mittels der Spanneinrichtung (55;58) zur Verriegelungsverschwenkung bei wieder-hergestelltem Minimalabstand (a-a) freisetzbar ist.

2. Gießformwechseleinrichtung nach Patentanspruch 1, dadurch gekennzeichnet, daß die beim Quertransport zugleich an beiden Formträgern (26;54) mittels Stützelementen (53) abgestützte, verriegelte Spritzgießform (S) einerseits mit der Beaufschlagungskante (40d) ihres Winkelhebels (40) am stationären Formträger (26) und andererseits mit der Anlageplatte (11') am bewegbaren Formträger (54) je wenigstens teil- und/oder zeitweise zur Führung anliegt und nach dem Quertransport durch die Rückstellfeder (42b) auf den Stützelementen (530 zur Wiederherstellung des Minimalabstandes (a-a) in Schließrichtung der Formschließeinheit verschiebbar und dadurch die Rückstellfeder (42b) zur Verriegelungsverschwenkung freisetzbar ist.

3. Gießformwechseleinrichtung nach Patentanspruch 2, dadurch gekennzeichnet, daß die bolzenartigen Stützelemente (53) linienförmige Friktionsflächen geringer Friktion als Stützflächen zur Spritzgießform (S) aufweisen.

4. Gießformwechseleinrichtung nach einem der vorhergehenden Patentansprüche, dadurch gekennzeichnet, daß die Schwenkachse (41) des einzigen Winkelhebels (40) in vertikaler Anordnung in der Anlageplatte (11;11') der betreffenden Formhälfte (Ss bzw. Sb) gelagert ist und daß ein Riegelarm (40a) des Winkelhebels (40) in Ausnehmungen (43-45) der Formhälften (Ss;Sb) aufgenommen ist, die durch offene Einarbeitungen gebildet sind.

5. Gießformwechseleinrichtung nach Patentanspruch 4, dadurch gekennzeichnet, daß der in den Einarbeitungen aufgenommene Riegelarm (40a) und die obere, horizontale Begrenzungsfläche der den Betätigungsarm (40b) aufnehmenden Ausnehmung (43) je etwa bündig sind mit der oberen Oberfläche des Gießformkörpers.

6. Gießformwechseleinrichtung nach Patentanspruch 5, dadurch gekennzeichnet, daß das dachförmig ausgebildete Kipprofil der Beaufschlagungskante (40d) des Winkelhebels (40) einen parallel zur vertikalen Schwenkachse (41) verlaufenden Scheitel aufweist, der beim Quertransport der Spritzgießform (S) am benachbarten Formträger (26) anliegt, wobei der Schwenkweg des Winkelhebels (40) durch das Auftreffen der Anlageplatte (11) am stationären Formträger (26) sowie durch die Anlage des Riegelarmes (40a) an einer innerhalb des Gießformkörpers gelegenen vertikalen Anschlagfläche (12a) begrenzt. ist.

7. Gießformwechseleinrichtung nach einem der Patentansprüche 3 bis 6, dadurch gekennzeichnet, daß sich die Ausnehmung für den Riegelarm (40a) über eine an der Befestigungsplatte (11) anliegende Fassonplatte (12) und eine an die Trennfuge (t-t) angrenzende Konturenplatte (13) in eine an die Trennfuge (t-t) angrenzende Konturenabstützplatte (14) der anderen Formhälfte (Sb) hinein erstreckt und dort eine Verriegelungskammer (45) mit einer Verriegelungskante (45a) für die Verriegelungsnase (40c) bildet, wobei der Riegelarm (40a) mehr als doppelt so lang ist wie der Betätigungsarm (40b).

8. Gießformwechseleinrichtung nach einem der vorhergehenden Patentansprüche, dadurch gekennzeichnet, daß eine in einer etwa horizontal verlaufenden Bohrung des Betätigungsarmes (40b) des Winkelhebels (40) aufgenommene Rückstellfeder (42b) über ein kugeliges Stützelement (43a) an einer vertikalen Widerlagerfläche der Anlageplatte (11;11') angreift.

9. Gießformwechseleinrichtung nach Patentanspruch 8, dadurch gekennzeichnet, daß die als Schraubenfeder ausgebildete Rückstellfeder (42b) in der Bohrung einer Madenschraube (46) aufgenommen und an dieser abgestützt ist, welche Madenschraube (46) mit einer die Bohrung des Betätigungsarmes (40b) auskleidenden Hülse (47) im Gewindeeingriff steht.

10. Gießformwechseleinrichtung nach einem der Patentansprüche 1,3 bis 9, dadurch gekennzeichnet, daß die Entriegelungsverschwenkung des Winkelhebels (40) bei nicht ganz geschlossener Formschließeinheit ausschließlich durch die Spanneinrichtung (55,58) im Gefolge eines zeitlich gegeneinander versetzten Aufspannens der beiden Formhälften (Ss;Sb) auf die Formträger (26;54) bewirkbar ist.

## Claims

1. Mould change-over arrangement for the mould closing device of a plastics material injection moulding machine, which device is actuatable by a hydraulic closing means, said arrangement having a clamping means for fixedly clamping or releasing the mould halves (Ss; Sb) of the injection moulding mould (S), which are each provided with a contact plate (11; 11'), to or from the mould carriers (26; 54), and having a conveyor device for transversely conveying the injection moulding mould (S) from or into its operative position, as well as having a locking arrangement which includes at least one two-armed angle lever (40), which is mounted so as to be pivotable (axle 41) on one mould half (Ss; Sb) and can be swivelled (unlocking swivel movement; locking swivel movement) into its unlocked position by means of a motor-driven unlocking drive mechanism, which engages with the actuating arm (40b) of the angle lever (40), in opposition to the force of a return spring (42b) and into its locked position by means of the initially tensioned return spring (42b), characterised in that the actuating arm (40b) is accommodated in a recess (43) provided in the contact plate (11; 11') of the pertinent mould half (Ss; Sb); its edge of impingement (40d), which is provided with an inclined profile, protrudes beyond this contact plate (11; 11') during the transverse conveying of the locked injection moulding mould (S), which contact plate is situated at an appropriate minimum spacing (a–a) from the mould carrier (26 or 54); and, as a result of the mould half (Ss; Sb) being moved closer to the mould carrier (26 or 54) by means of the unlocking drive mechanism, the edge of impingement (40d) can be forced into the plane (x–x) of the contact plate (11 or 11') for unlocking purposes, thereby causing the inclined profile to tilt, and said edge is securable in the forced-in position by the clamping means (55; 58), the return spring (42b) being releasable upon commencement of the mould change-over process as a result of the mould half (Ss; Sb) being released by the clamping means (55; 58) for the locking swivel movement when the minimum spacing (a–a) is restored.

2. Mould change-over arrangement according to claim 1, characterised in that the locked injection moulding mould (S), which is supported equally on both mould carriers (26; 54) by means of supporting members (53) during the transverse conveying, abuts, on the one hand, with the edge of impingement (40d) of its angle lever (40) against the stationary mould carrier (26) and, on the other hand, with the contact plate (11') against the displaceable mould carrier (54), in each case at least partially and/or with respect to time for guidance purposes, and, after the transverse conveying, said moulding mould is displaceable into the closing direction of the mould closing device by means of the return spring (42b) on the supporting members (53) to restore the minimum spacing (a–a), and the return spring (42b) is thereby releasable for the locking swivel movement.

3. Mould change-over arrangement according to claim 2, characterized in that the pin-like supporting members (53) have linear frictional surfaces of low friction, which serve as supporting surfaces for the injection moulding mould (S).

4. Mould change-over arrangement according to one of the preceding claim, characterised in that the pivotal axle (41) of the single angle lever (40) is mounted in vertical disposition in the contact plate (11; 11') of the pertinent mould half (Ss or Sb), and a locking arm (40a) of the angle lever (40) is accommodated in recesses (43–45), which are provided in the mould halves (Ss; Sb) and are formed by open indentations.

5. Mould change-over arrangement according to claim 4, characterised in that the locking arm (40a), which is accommodated in the indentations, and the upper, horizontal boundary surface of the recess (43), which accommodates the actuating arm (40b), are each substantially flush with the upper surface of the moulding mould body.

6. Mould change-over arrangement according to claim 5, characterised in that the roof-like inclined profile of the edge of impingement (40d) of the angle lever (40) has an angle point, which extends parallel to the vertical pivotal axle (41) and abuts against the adjacent mould carrier (26) during the transverse conveying of the injection moulding mould (S), the pivotal movement of the angle lever (40) being defined by the contact plate (11) encountering the stationary mould carrier (26) and by the locking arm (40a) abutting against a vertical stop face (12a), which is situated internally of the moulding mould body.

7. Mould change-over arrangement according to one of claim 3 to 6, characterised in that the recess for the locking arm (40a) extends via the intermediary of a forming plate (12), which abuts against the fastening plate (11), and via the intermediary of a configuration plate (13), which abuts against the butt joint (t–t), into a configuration supporting plate (14) of the other mould half (Sb), the latter plate abutting against the butt joint (t–t), and said recess form there a locking chamber (45) with a locking edge (45a) for the locking projection member (40c), the locking arm (40a) being more than twice as long as the actuating arm (40b).

8. Mould change-over arrangement according to one of the preceding claims, characterised in that a return spring (42b), which is accommodated in a substantially horizontally extending bore in the actuating arm (40b) of the angle lever (40), co-operates with a vertical abutment face of the contact plate (11; 11') via the intermediary of a spherical supporting member (43a).

9. Mould change-over arrangement according to claim 8, characterised in that the return spring (42b), which is in the form of a coil spring, is accommodated in a bore in a grub screw (46) and is supported thereon, the grub screw (46) being in threaded engagement with a sleeve (47), which covers the bore in the actuating arm (40b).

10. Mould change-over arrangement according to one of claim 1, 3 to 9, characterised in that, when the mould closing device is not completely closed, the unlocking swivel movement of the angle lever (40) is effected exclusively by the clamping means (55, 58) as a result of the two mould halves (Ss; Sb) being clamped onto the mould carriers (26; 54) in a time-staggered manner relative to each other.

**Revendications**

1. Dispositif de changement de moule prévu sur l'unité de fermeture du moule, actionnable au moyen d'un système hydraulique de fermeture, d'une machine de moulage par injection de matière plastique, avec un mécanisme de serrage pour le blocage par serrage des demi-moules (Ss; Sb) du moule d'injection (S), munis d'une plaque d'application respective (11; 11'), sur les porte-moule (26; 54), ou respectivement pour le desserrage de ces demi-moules, et avec un mécanisme de transport pour un transport transversal du moule d'injection (S) hors d'une position de travail, ou respectivement dans cette position, ainsi qu'avec un mécanisme de verrouillage, qui comprend au moins un levier coudé (40) à deux bras monté pivotant (axe 41) sur un des demi-moules (Ss; Sb), levier qui peut être pivoté (pivotement de déverrouillage; pivotement de verrouillage) en position déverrouillée, à l'encontre de la force d'un ressort de rappel (42b), par un entraînement de déverrouillage motorisé agissant sur le bras d'actionnement (40b) du levier coudé (40), et en position verrouillée par le ressort de rappel (42b) précontraint, caractérisé en ce que le bras d'actionnement (40b) est reçu dans un évidement (43) de la plaque d'application (11; 11') du demi-moule concerné (Ss; Sb), en ce que son arête de sollicitation (40d) munie d'un profil de basculement, lors du transport transversal du moule d'injection verrouillé (S), s'étend au-delà de cette plaque d'application (11; 11') qui se trouve à un écartement minimal correspondant (a–a) du porte-moule (respectivement 26 ou 54), et en ce qu'à la suite d'un rapprochement entre le demi-moule (Ss; Sb) et le porte-moule (respectivement 26 ou 54) provoqué par l'entraînement de déverrouillage, l'arête de sollicitation (40d) peut être, en vue du déverrouillage, enfoncée dans le plan (x–x) de la plaque d'application (11; 11') avec basculement du profil de basculement, et fixée en position enfoncée par le mécanisme de serrage (55; 58), le ressort de rappel (42b) pouvant, lors de l'introduction du changement de moule, en desserrant les demi-moules (Ss; Sb) au moyen du dispositif de serrage (55; 58), être libéré pour le pivotement de verrouillage lorsque l'écartement minimal (a–a) est rétabli.

2. Dispositif de changement de moule selon la revendication 1, caractérisé en ce que le moule d'injection (S) verrouillé, qui lors du transport transversal est simultanément appuyé contre les deux porte-moule (26; 54) à l'aide d'éléments de soutien (53), s'appuie respectivement, au moins partiellement et/ou temporairement, pour le guidage, d'une part contre le porte-moule stationnaire (26) par l'arête de sollicitation (40d) de son levier coudé (40), et d'autre part contre le porte-moule mobile (54) par la plaque d'application (11'), et il peut, à la suite du transport transversal, être déplacé en translation par le ressort de rappel (42b) sur les éléments de soutien (53) afin de rétablir l'écartement minimal (a–a) dans le sens de fermeture de l'unité de fermeture du moule, de sorte que le ressort de rappel (42b) peut être libéré pour le pivotement de verrouillage.

3. Dispositif de changement de moule selon la revendication 2, caractérisé en ce que les éléments de soutien (53) du genre goujons présentent, comme surfaces de soutien pour le moule d'injection (S), des surfaces de friction en forme de lignes, à faible friction.

4. Dispositif de changement de moule selon l'une des revendications précédentes, caractérisé en ce que l'axe de pivotement (41) de l'unique levier coudé (40) est monté verticalement dans la plaque d'application (11; 11') du demi-moule concerné (respectivement Ss ou Sb), et en ce qu'un bras de verrouillage (40a) du levier coudé (40) est reçu dans des évidements (43–45) des demi-moules (Ss; Sb) qui sont formés par des cavités ouvertes.

5. Dispositif de changement de moule selon la revendication 4, caractérisé en ce que le bras de verrouillage (40a) reçu dans les cavités et la face de délimitation supérieure horizontale de l'évidement (43) recevant le bras d'actionnement (40b) se trouvent chacun approximativement à fleur de la surface supérieure du corps de moule.

6. Dispositif de changement de moule selon la revendication 5, caractérisé en ce que le profil de basculement en forme de toit de l'arête de sollicitation (40d) du levier coudé (40) présente un sommet qui s'étend parallèlement à l'axe de pivotement vertical (41) et qui s'applique contre le porte-moule voisin (26) lors du transport transversal du moule d'injection (S), le parcours de pivotement du levier coudé (40) étant délimité par l'incidence de la plaque d'application (11) sur le porte-moule stationnaire (26), et par l'application du levier de verrouillage (40a) contre une face de butée verticale (12a) située à l'intérieur du corps de moule.

7. Dispositif de changement de moule selon l'une des revendications 3 à 6, caractérisé en ce que l'évidement pour le bras de verrouillage (40a) s'étend, en traversant une plaque de façonnage (12) appliquée contre la plaque de fixation (11) et une plaque de formation de contours (13) limitrophe du joint de séparation (t–t), jusque dans une plaque de soutien de contours (14), limitrophe du joint de séparation (t–t), de l'autre demi-moule (Sb), et y forme une chambre de verrouillage (45) avec une arête de verrouillage (45a) pour l'ergot de verrouillage (40c), le bras de verrouillage (40a) étant plus de deux fois plus long que le bras d'actionnement (40b).

8. Dispositif de changement de moule selon l'une des revendications précédentes, caractérisé en ce qu'un ressort de rappel (42b), reçu dans un alésage approximativement horizontal du bras d'actionnement (40b) du levier coudé (40), agit par l'intermédiaire d'un élément de soutien sphérique (43a) contre une face de contre-appui verticale de la plaque d'application (11; 11').

9. Dispositif de changement de moule selon la revendication 8, caractérisé en ce que le ressort de rappel (42b), réalisé sous forme de ressort hélicoïdal, est reçu dans l'alésage d'une vis sans tête (46) et appuyé contre cette dernière, cette vis sans tête (46) étant vissée dans une douille (47) garnissant l'alésage du bras d'actionnement (40b).

10. Dispositif de changement de moule selon l'une des revendications 1, 3 à 9, caractérisé en ce que le pivotement de déverrouillage du levier coudé (40), lorsque l'unité de fermeture du moule n'est pas totalement fermée, peut être engendré exclusivement par le mécanisme de serrage (55, 58) à la suite d'un serrage mutuellement décalé dans le temps des deux demi-moules (Ss; Sb) sur les porte-moule (26; 54).

EP 0 273 405 B1

FIG. 1

FIG. 2

FIG. 3

EP 0 273 405 B1

## FIG.4

## FIG.5

FIG. 6

41 40a 40c

40b 40

42 40d

FIG. 7

40b 41 40

40d 40a

42

42b 42a

40c